# EUROPÄISCHE PATENTSCHRIFT

(11) **EP 2 394 354 B1**
(45) Veröffentlichungstag und Bekanntmachung des Hinweises auf die Patenterteilung: **16.08.2017**
(21) Anmeldenummer: 10702443.2
(22) Anmeldetag: 02.02.2010
(51) Int. Cl.: H02K 7/06

(54) **SPINDELMOTOR**
SPINDLE MOTOR
MOTEUR DE BROCHE

(30) Priorität: 06.02.2009 DE 102009007958
(43) Veröffentlichungstag der Anmeldung: 14.12.2011
(73) Patentinhaber: SEW-EURODRIVE GmbH & Co. KG, 76646 Bruchsal (DE)
(72) Erfinder: GABRIEL, Markus, 76694 Forst (DE); DITTES, Gerhard, 75053 Gondelsheim (DE)
(86) Internationale Anmeldenummer: PCT/EP2010/000598
(87) Internationale Veröffentlichungsnummer: WO 2010/089073

(56) Entgegenhaltungen:
- EP-A2- 1 729 401
- DE-A1- 3 502 774
- DE-U1-202006 019 873
- JP-U- 2 150 451
- JP-U- 3 083 460

## Beschreibung

Die Erfindung betrifft einen Spindelmotor.

Aus der DE 102 35 078 A1 ist ein Spindelmotor bekannt, der nur ein begrenztes Fettvolumen aufweist und somit eine geringe Standzeit.

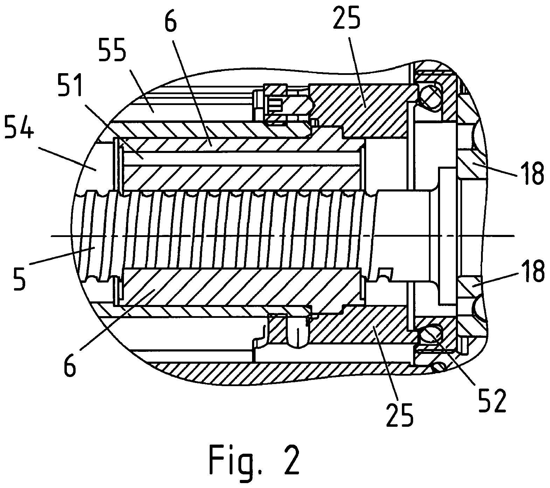

Aus der DE 10 2007 014 714 ist ein Spindelmotor bekannt, der eine Schmierstoffzuführung 21 in der dortigen Figur 2 aufweist. Er muss zeitweise nachgeschmiert werden.

Aus dem Katalog der Firma Dichtomatik sind Hochdruckdichtungen aus dem Fachgebiet der Hydraulik bekannt, wie beispielsweise eine PTFE-Nutringdichtung mit einer V-Feder aus Stahl, dort mit MA47 bezeichnet. Außerdem ist eine weitere Hochdruckdichtung bekannt, wie das Produkt WCP21, welche eine Radial-Wellendichtung mit einer PTFE-Dichtlippe und einer Etastomervorspannscheibe darstellt, die zwischen zwei Metallkäfigen geklemmt sind.

Aus der DE 10 2008 025 072 A1 ist ein Spindelmotor bekannt, bei dem die Gewindespindel 5 an ihrem axialen Endbereich bei eingefahrener Kolbenstange abgestützt wird in einer Abstützung mit dortigem Bezugszeichen 8, welche eingepresst verbunden ist in die Kolbenstange 14. Somit verliert die Gewindespindel bei Ausfahren der Kolbenstange 14 über einen gewissen Betrag hinaus den Kontakt.

Aus der DE 35 02 774 A1 ist eine Linearantriebseinheit nach dem Oberbegriff der vorliegenden Erfindung bekannt, bei der die Spindel an ihrem axialen Endbereich mittels eines Rings abgestützt ist.

Aus der JP 02 150451 U ist ebenfalls eine Linearantriebseinheit bekannt, bei der ein Motor an einem Ende über eine Kupplung verbunden ist mit einer Spindel.

Aus der JP 03 083460 U ist ebenfalls eine Linearantriebseinheit bekannt, bei der ein Elektromotor an einem Ende direkt verbunden ist mit einer Spindel.

Der Erfindung liegt die Aufgabe zugrunde, bei einem Spindelmotor die Standzeit zu verlängern, insbesondere bei langen Hublängen.

Erfindungsgemäß wird die Aufgabe bei dem Spindelmotor nach den in Anspruch 1 angegebenen Merkmalen gelöst.

Erfindungsgemäß umfasst der Spindelmotor nach Anspruch 1 einen Elektromotor mit einem Rotor, der mit einer Gewindespindel verbunden ist, deren Gewinde mit einem Gewinde einer mit einer Kolbenstange verbundenen Spindelmutter im Eingriff steht,
wobei die Spindelmutter mit Kolbenstange axial geführt ist in einem Gehäuseteil des Spindelmotors,
wobei zur axialen Führung ein Führungsteil mit der Spindelmutter und der Kolbenstange verbunden ist,
wobei die Gewindespindel an ihrem dem Elektromotor zugewandten axialen Endbereich in dem oder in einem zweiten, mit dem ersten Gehäuseteil verbundenen Gehäuseteil über Lager gelagert ist,
wobei die Gewindespindel an ihrem vom Elektromotor abgewandten axialen Endbereich über ein an der Gewindespindel angeordnetes Lager an der Kolbenstange gelagert ist.

Von Vorteil ist dabei, dass ein die Gewindespindel beidseitig gelagert und somit abgestützt ist. Überraschenderweise ist dies trotz der linearen Hubbewegungen an der Kolbenstange ausgeführt. Hierzu ist der Außenring des Lagers mit einem Kunststoffteil versehen, das der Gleitreibung bei der axialen Hubbewegung stand halten muss. Durch eine entsprechende Vorspannung, die in einem Federbereich des Abstützelementes vorgesehen wird, ist eine dauerfeste Lagerung ausgeführt.

Erfindungsgemäß ist der Außenring des Lagers in einer Abstützung, also einem Abstützteil, gehalten, Von Vorteil ist dabei, dass das Lager die rotative Bewegung der Gewindespindel und die Abstützung die lineare Bewegung aufnimmt. Somit ist ein reibungsarmes Kugellager einsetzbar und die Abstützung muss nur an der axial beweglichen Kolbenstange lagern, wobei die Relativgeschwindigkeiten viel geringer sind als bei Weglassen des rotativen Lagers, weil dann nämlich auf entsprechend großem Durchmesser an der Kolbenstange hohe Relativgeschwindigkeiten entstehen.

Erfindungsgemäß ist der Außenring des Lagers mittels eines in einer axialen Richtung vorgesehenen Anschlages und mittels eines in der anderen axialen Richtung vorgesehenen Sicherungsrings gehalten in der Abstützung. Von Vorteil ist dabei, dass ein formschlüssiges Halten ausführbar ist.

Erfindungsgemäß umfasst die Abstützung einen Federbereich, mittels dessen die Abstützung an der Kolbenstange Stützkräfte ableitet. Von Vorteil ist dabei, dass eine Vorspannung aufbringbar ist und somit unabhängig von der Einbaulage eine gleichmäßige Abstützung erreichbar ist. Außerdem ist bei höherer Vorspannung die Schwingungsneigung reduzierbar.

Erfindungsgemäß ist der Federbereich der Abstützung in Umfangsrichtung unterbrochen ausgeführt oder weist Ausnehmungen auf. Von Vorteil ist dabei, dass ein Öldurchtritt ermöglicht ist und somit keine großen Druckdifferenzen zwischen dem axial vor der Abstützung und dem axial hinter der Abstützung liegenden Raumbereich erreichbar ist.

Erfindungsgemäß ist die Abstützung aus Polyethylen oder einem Polyethylen enthaltendem Material gefertigt. Von Vorteil ist dabei, dass die Vorspannung auch bei hohen Temperaturen dauerhaft erhaltbar ist.

Erfindungsgemäß weist die Spindelmutter Entlüftungsbohrungen auf. Von Vorteil ist dabei, dass keine hohe Druckdifferenz aufbaubar ist zwischen dem von der Kolbenstange umgebenen und dem zwischen Kolbenstange und Gehäuse liegenden Raumbereich, der zu der dem Elektromotor zugewandten Seite der Spindelmutter hin offen ist beziehungsweise mittels entsprechender Ausnehmungen verbunden ist, so dass die axial motorseitig austretende Luft ohne besondere Strömungswiderstände zum zwischen Kolbenstange und Gehäuse liegenden Raumbereich hin strömen kann.

Erfindungsgemäß sind die Entlüftungsbohrungen im Wesentlichen axial ausgerichtet, insbesondere wobei die Entlüftungsbohrungen den von der Kolbenstange umschlossenen Raumbereich mit dem zwischen Kolbenstange und Gehäuse angeordneten Raumbereich verbinden zum Druckausgleich. Von Vorteil ist dabei, dass auch hohem Öl-Anteil in den Raumbereichen hohe gegen die Bewegung der Gewindespindel mit Kolbenstange gerichtete Kräfte vermeidbar sind.

Erfindungsgemäß ist in den Raumbereichen ein Öl-Luft-Gemisch vorgesehen. Von Vorteil ist dabei, dass auch bei hohen Anteilen eines inkompressiblen Öls nur geringe gegen die Hubbewegung gerichtete Kräfte auftreten. Denn sowohl die Bildung von Vakuum als auch das Auffahren auf Öl ist verhindert.

Bei einer vorteilhaften Ausgestaltung ist ein Zapfen am axialen Endbereich der Gewindespindel ausgebildet, auf dem der Innenring des Lagers vorgesehen ist, insbesondere wobei der Zapfen einstückig an der Gewindespindel ausgebildet ist. Von Vorteil ist dabei, dass der Gewindebereich der Gewindespindel nicht in Berührung kommt mit der Abstützung. Somit ist auch eine sichere Funktion und ein sicheres Halten der Abstützung erreichbar.

Bei einer vorteilhaften Ausgestaltung sind in Umfangsrichtung vier oder mehr Entlüftungsbohrungen vorgesehen. Von Vorteil ist dabei, dass somit auch bei hoher Ölbefüllung und bei beliebigen Einbaulagen wenigstens eine Entlüftungsbohrung im Wesentlichen in Luft liegt.

Bei einer vorteilhaften Ausgestaltung ist das Gehäuseteil axial zwischen Elektromotor und dem der Spindelmutter angeordnet. Von Vorteil ist dabei, dass die Entwärmungsmittel beide Raumbereiches des Spindelantriebes entwärmen und somit je nach Betriebsart der Wärmestrom fließt.

Bei einer vorteilhaften Ausgestaltung ist eine Ölbad-Schmierung vorgesehen. Von Vorteil ist dabei, dass ein ständiger Betrieb ohne Unterbrechung für Fettschmierungen und dergleichen ermöglicht ist. Außerdem ist eine besonders kompakte Bauart ermöglicht und geringe Reibungsverluste sind vorsehbar. Insbesondere ist eine Lebensdauerschmierung ermöglicht. Auch die Wärmeabfuhr ist verbessert, da die im Innern erzeugte Wärme besser aufgespreizt ist und somit die gesamte Oberfläche zur Wärmeabfuhr lokalbegrenzter Reibungsquellen und somit Wärmequellen nutzbar ist.

Bei einer vorteilhaften Ausgestaltung ist im Inneren des Spindelmotors, insbesondere im Spindelbereich abtriebsseitig vom Elektromotor, das Ölbad vorgesehen. Insbesondere ist eine Dichtung zwischen dem Raumbereich des Elektromotors und dem Raumbereich, in welchem die Spindelmutter angeordnet ist, vorgesehen. Insbesondere ist zumindest eine Hochdruckdichtung zum Abdichten verwendet, insbesondere zwischen Spindelbereich und Elektromotor und/oder zwischen Spindelbereich und Umgebung. Von Vorteil ist dabei, dass im Elektromotor keine Ölbenetzung auftritt und seine Funktionsweise ungestört bleibt.

Bei einer vorteilhaften Ausgestaltung ist die Dichtung axial zwischen einem Lager der Gewindespindel und einer die Rotorwelle und die Gewindespindel verbindenden Kupplung angeordnet. Von Vorteil ist dabei, dass das Lager und die Dichtung vom Öl schmierbar sind.

Bei einer vorteilhaften Ausgestaltung ist die Kupplung eine axial steckbare Kupplung. Von Vorteil ist dabei, dass das Lösen und Wiederverbinden des Motors einfach und ohne Aufwand ermöglicht ist. Außerdem treten beim Wechseln des Elektromotors keine Ölverluste und Ölverschmutzungen auf.

Bei einer vorteilhaften Ausgestaltung ist die Dichtung als Wellendichtring ausgeführt, der in einem Gehäuseteil seinen Sitz hat, welches auch einen Sitz zur Aufnahme des Lagers der Gewindespindel aufweist,
wobei die Lauffläche des Wellendichtrings an der Gewindespindel vorgesehen ist. Von Vorteil ist dabei, dass eine kompakte Bauart erreichbar ist und das Gehäuseteil nur mit den zwei Sitzen zu bearbeiten ist. Außerdem gelangt Öl, das in den Bereich des Wellendichtrings gefördert wird einfach und leicht zum Lager.

Bei einer vorteilhaften Ausgestaltung weist die Gewindespindel eine Schulter zur Aufnahme von Axialkräften auf. Von Vorteil ist dabei, dass der Elektromotor vor Axialkräften geschützt bleibt. Außerdem ist somit die axial steckbare Kupplung zum Verbinden verwendbar, da bei Normalbetrieb die Kupplung geschützt ist vor Axialkräften. Wenn nun Motor und Spindel getrennt werden sollen, wird Axialkraft beim Abheben des Motors aufgebracht und somit die Kupplung getrennt.

Insbesondere ist die Schulter am Innenring des für die Gewindespindel vorgesehenen Lagers abgestützt. Von Vorteil ist dabei, dass die Trennung des Motors über die steckbare Kupplung ermöglicht ist.

Bei einer vorteilhaften Ausgestaltung ist die Kolbenstange abtriebsseitig von einer schmierstoffbetriebenen Dichtungsanordnung abgedichtet zum abtriebsseitigen Gehäuseteil hin. Von Vorteil ist dabei, dass einfache und kostengünstige Dichtungen im Gegensatz zu trockenbetriebenen Dichtungen verwendbar sind.

Bei einer vorteilhaften Ausgestaltung umfasst die Dichtungsanordnung zumindest einen Abstreifer, einen O-Ring und/oder eine Nutdichtung. Von Vorteil ist dabei, dass schmierstoffbetriebene, insbesondere ölbetriebene Dichtelemente einsetzbar sind, die auch bei einem Überdruck von 2 bar oder mehr Dichtheit gewährleisten.

Bei einer vorteilhaften Ausgestaltung ist die Gewindespindel mit dem Rotor gelagert in einem Gehäuseteil des Elektromotors. Von Vorteil ist dabei, dass Lager einsparbar sind

Bei einer vorteilhaften Ausgestaltung ist zur axialen Führung ein Führungsteil mit der Spindelmutter und der Kolbenstange verbunden. Von Vorteil ist dabei, dass das Führungsteil die Funktion der Verbindung von Spindelmutter und Kolbenstange übernimmt sowie die Funktion der Führung in axialer Richtung.

Bei einer vorteilhaften Ausgestaltung ist das Führungsteil im Gehäuseteil axial geführt über Nutensteine, insbesondere Nutensteine, welche in einer Nut des Gehäuseteils axial bewegbar angeordnet sind. Von Vorteil ist dabei, dass kostengünstige einfache Elemente verwendbar sind.

Bei einer vorteilhaften Ausgestaltung ist der Rotor mit der Gewindespindel spielfrei verbunden, insbesondere mittels einer Schraubverbindung zusammen mit einer Klemmverbindung. Von Vorteil ist dabei, dass die axialen Positionen mit hoher Genauigkeit anfahrbar sind und dabei eine hohe Wiederholgenauigkeit erreichbar ist.

Bei einer vorteilhaften Ausgestaltung ist die Kolbenstange mittels einer Dichtung, insbesondere Stangendichtung, insbesondere Abstreifer, gegen ein Gehäuseteil abgedichtet ist. Von Vorteil ist dabei, dass das Innere des Spindelmotors schützbar ist, insbesondere also auch die Gewindebereiche der Gewindespindel und der Spindelmutter.

Bei einer vorteilhaften Ausgestaltung ist im Bereich der axialen Endpositionen, also Anschläge, des Führungsteils jeweils ein elastisches Element, insbesondere O-Ring, angeordnet zur Aufnahme kinetischer Energie beim Auftreffen auf die Endposition. Von Vorteil ist dabei, dass auch im Sicherheitsfall Zerstörungen vermieden werden.

Bei einer vorteilhaften Ausgestaltung ist das Führungsteil mit der Kolbenstange mittels Klemmverbindung verbunden. Von Vorteil ist dabei, dass eine spielfreie Verbindung ausgeführt ist.

Bei einer vorteilhaften Ausgestaltung umfasst die Klemmverbindung Spannmittel, mit welchen das Führungsteil derart verformbar ist, dass die Kolbenstange einklemmbar ist. Insbesondere sind die Spannmittel tangential ausgerichtet vorgesehen, insbesondere zum Verdrehsichern der Kolbenstange gegen das Führungsteil. Von Vorteil ist dabei, dass einfache und kostengünstige Elemente verwendbar sind.

Bei einer vorteilhaften Ausgestaltung sind drei Nutensteine am Umfang angeordnet. Von Vorteil ist dabei, dass nur eine geringe Anzahl von Nutensteinen notwendig ist.

Bei einer vorteilhaften Ausgestaltung ist ein Stellring vorgesehen, wobei mittels Schraubelementen ein Verspannen des Innenrings eines Lagers des Motors ausführbar ist. Darüber hinaus ist mittels weiterer Schraubelemente ein Erzeugen von Andruckkraft für die Klemmverbindung zwischen Gewindespindel und Rotor ausführbar. Von Vorteil ist dabei, dass in einfacher Weise eine spielfreie Verbindung erzeugbar ist.

Bei einer vorteilhaften Ausgestaltung weist der Rotor in einem axialen Endbereich einen oder mehrere Axialschlitze auf. Von Vorteil ist dabei, dass nur geringe Andruckkräfte zum Verspannen notwendig sind.

Bei einer vorteilhaften Ausgestaltung wird eine formschlüssige Verbindung zwischen Führungsteil und Kolbenstange mittels Spannmitteln vorgesehen. Als Spannmittel sind Spannstifte, also Spannhülsen, verwendbar, die in zylindrische Bohrungen eingesteckt sind. Für diese formschlüssige Verbindung ist an der Kolbenstange eine derartige Abflachung vorgesehen, dass die Spannstifte berührend umgeben sind und sich an diese Abflachungsoberfläche anschmiegen infolge ihrer durch elastische Verformung bedingten Anpresskraft. Dazu ist die Abflachung als Teil einer Oberfläche eines gedachten Zylinders ausgeführt. Von Vorteil ist dabei, dass nur geringe Andruckkräfte zum Verspannen notwendig sind.

Bei einer vorteilhaften Ausgestaltung weist die Gewindespindel an ihrem einen Endbereich einen Zapfen zum Zentrieren auf. Von Vorteil ist dabei, dass einfache und kostengünstige Zentriermittel vorgesehen sind und kein zusätzlicher Bauraum hierfür notwendig ist.

Bei einer vorteilhaften Ausgestaltung ist das Zentrierteil zum Zentrieren des Gehäuseteils am Motorflansch vorgesehen. Insbesondere ist das Zentrierteil zur Aufnahme eines elastischen Elements vorgesehen. Von Vorteil ist dabei, dass ein elastischer Anschlag für das Führungselement vorsehbar ist.

Bei einer vorteilhaften Ausgestaltung ist die Kolbenstange an ihrer zur Umgebung hin vorgesehenen Oberfläche glatt ausgeführt. Von Vorteil ist dabei, dass keine Verschmutzungen ins Innere des Spindelmotors vordringen können, weil eine Abdichtung zum Gehäuseteil in einfacher und wirkungsvoller Weise ausführbar ist.

Bei einer vorteilhaften Ausgestaltung umfasst der Rotor Permanentmagnete, insbesondere der Spindelmotor nach dem Synchronmotor-Prinzip angetrieben ist. Von Vorteil ist dabei, dass hohe Kräfte erzeugbar sind. Weitere Vorteile ergeben sich aus den Unteransprüchen.

Die Erfindung wird nun anhand von Abbildungen näher erläutert:

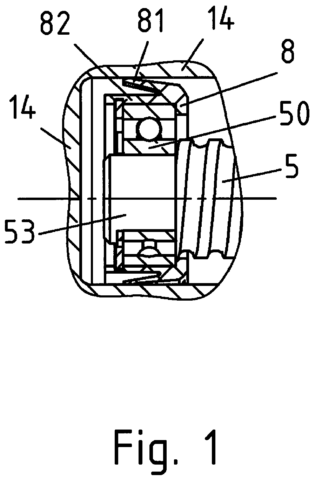

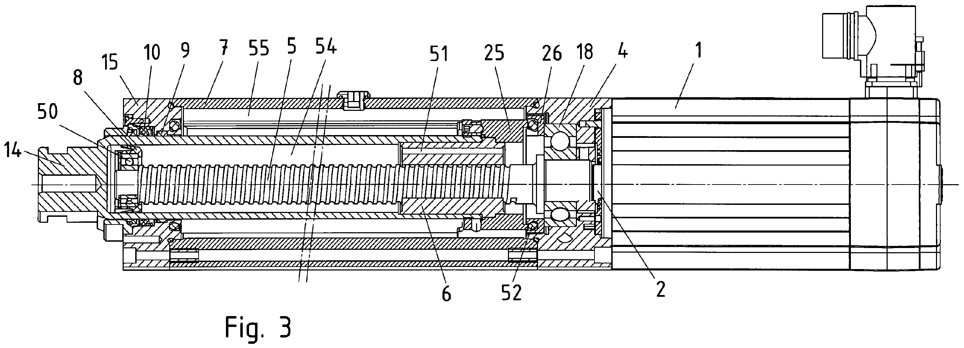

In der Figur 3 ist ein erfindungsgemäßer Spindelmotor in Schnittansicht gezeichnet. In Figur 2 und 1 sind jeweilige Ausschnitte hiervon vergrößert dargestellt.

Das Motorgehäuse 1 des Elektromotors, umfassend Rotorwelle 2 und Stator, ist mit den Gehäuseteilen 4, 7 und 15 des Spindelmotors dicht verbunden. Vorzugsweise ist an jeder Verbindungsschnittstelle der Gehäuseteile ein O-Ring miteingebracht, um Dichtheit auch gegen Überdruck, von mehr als beispielsweise 2 bar zu gewährleisten.

Das Gehäuseteil 4 nimmt das Lager 18 auf, über welches die Gewindespindel 5 gelagert ist. Diese ist über eine axial steckbare Kupplung mit der Rotorwelle 2 verbunden. Die Kupplung weist Klauenteile auf, zwischen denen ein Kunststoffstern angeordnet ist. Vorzugsweise ist diese Wellenkupplung spielfrei.

Eine im Gehäuseteil 4 angeordneter Dichtung dichtet den Spindelinnenraum gegen den Motor hin ab. Insbesondere ist die Dichtung 52 als O-Ring ausgeführt.

Somit ist der Innenraum mit Öl befüllbar. Abtriebsseitig ist die Kolbenstange 14 mittels Führungsring 9 und Dichtring 10 abgedichtet gegen die Umgebung.

Die Dichtungen sind dabei derart gewählt, dass sie gegen Überdrucke von mehr als 2 bar Dichtheit gewährleisten.

Die Gewindespindel weist eine Schulter auf, die Axialkräfte ableitet an das Lager 18.

Bei Drehen der Gewindespindel 5 wird die Spindelmutter 6 axial bewegt, weil sie über Führungsteile (25, 26), die mit Linearführvorrichtungen verbunden sind, linear geführt ist.

Zur Abstützung, die insbesondere bei besonders langer Ausführung der Gewindespindel 5 vorteilhaft wirksam ist, ist eine Abstützung 8 vorgesehen, die eine zylindrische Ausnehmung aufweist zur Aufnahme eines Lagers 50, dessen Innenring auf einem Zapfen 53 vorgesehen ist, der am axialen Endbereich der Gewindespindel 5 ausgebildet ist. Vorteiligerweise ist der Zapfen 53 mit der Gewindespindel 5 einteilig ausgeführt.

Die Abstützung 8 ist also nicht verbunden mit der Kolbenstange 14 führt somit das Abstützen bei jeder Stellung der Kolbenstange 14 aus, also auch, wenn die Kolbenstange weit heraus gefahren wird.

Der Außenring des Lagers 50 ist also vom Aufnahmebereich 82 der Abstützung 8 aufgenommen. Der Außenring ist nach der axial innen liegenden Seite mit Anschlag gesichert und nach der axial außen liegenden Seite mit einem Sicherungsring 83. Zum Toleranzausgleich sind auch Passscheiben einbringbar, die am Sicherungsring 83 anliegen. Die Abstützung 8 weist einen Federbereich 81 auf, so dass sie mit ihrem äußeren Umfang gegen die Innenwandung der Kolbenstange drückt und somit die Gewindespindel abstützt.

In Umfangsrichtung weist der Federbereich 81 Unterbrechungen und/oder Ausnehmungen auf, wodurch ein Öldurchtritt in axialer Richtung ermöglicht ist. Vorteiligerweise ist die Abstützung Ortsfest vorgesehen und muss daher nur auf die lineare Bewegung der Kolbenstange vorgesehen sein.

Die Abstützung ist vorzugsweise aus einem speziellen Polyethylen-Material gefertigt, wodurch die Vorspannung, also Federkraft, auch bei hohen Temperaturen, insbesondere bei Temperaturen bis 80° Celsius, im Wesentlichen dauerhaft erhalten bleibt.

Um die Gewindespindel 5 herum ist Öl als Schmierstoff vorgesehen.

Das Ölbad verbessert die Wärmeabfuhr, da die Wärme besser aufgespreizt wird und somit die Gehäuseteile gleichmäßiger erwärmt sind vom Inneren her des Spindelmotorbereichs.

Die Spindelmutter 6 weist axiale Entlüftungsbohrungen 51 auf, so dass der von der Kolbenstange 14 umschlossene Raumbereich 54, der im wesentlichen zwischen Gewindespindel 5 und Kolbenstange 14 eingeschlossen ist und ein Luft-Öl-Gemisch enthält, zum Druckausgleich verbunden ist mit einem motorseitig an der Spindelmutter 6 anliegenden Raumbereich, welcher mit dem zwischen Gehäuse und Kolbenstange angeordneten Raumbereich 55, der Luft oder ein Luft-Öl-Gemisch enthält. Somit bei Verfahren der Spindelmutter 6 kein wesentlicher Überdruck aufgebaut. Dies ist insbesondere um so wichtiger je weniger Luft im Gemisch vorhanden ist. Denn Öl ist im Wesentlichen inkompressibel, wodurch sich bei Fehlen von Luft und Fehlen der Entlüftungsbohrungen extreme Kräfte aufbauen können, wenn die Gewindespindel gegen Öl verfahren wird, oder hohe Kräfte, wenn die Gewindespindel aus dem Öl herausgefahren wird unter Bildung von Vakuum.

In Umfangsrichtung sind mehrere axiale Entlüftungsbohrungen an der Gewindespindel 6 nacheinander angeordnet. Bevorzugt sind vier Bohrungen am Umfang angeordnet.

### Bezugszeichenliste

- 1: Motorgehäuse
- 2: Rotorwelle
- 4: Gehäuseteil
- 5: Gewindespindel
- 6: Spindelmutter
- 7: Gehäuseteil
- 8: Abstützung
- 9: Führungsring
- 10: Dichtring
- 14: Kolbenstange
- 15: Gehäuseteil
- 18: Lager
- 25: Spindelmutter
- 26: Führungsteil
- 50: Lager
- 51: Entlüftungsbohrung
- 52: Dichtung
- 53: Zapfen
- 54: Raumbereich innerhalb der Kolbenstange
- 55: Raumbereich außerhalb der Kolbenstange
- 81: Federbereich
- 82: Lageraufnahmebereich

- 83: Sicherungsring

## Patentansprüche

1. Spindelmotor,
umfassend einen Elektromotor mit einem Rotor, der mit einer Gewindespindel (5) verbunden ist, deren Gewinde mit einem Gewinde einer mit einer Kolbenstange (14) verbundenen Spindelmutter (6) im Eingriff steht,
wobei die Spindelmutter (6) mit Kolbenstange (14) axial geführt ist in einem Gehäuseteil des Spindelmotors,
wobei zur axialen Führung ein Führungsteil mit der Spindelmutter (6) und der Kolbenstange (14) verbunden ist,
wobei die Gewindespindel (5) an ihrem dem Elektromotor zugewandten axialen Endbereich in dem oder in einem zweiten, mit dem ersten Gehäuseteil verbundenen Gehäuseteil über Lager (18) gelagert ist,
wobei die Gewindespindel (5) an ihrem vom Elektromotor abgewandten axialen Endbereich über ein an der Gewindespindel (5) angeordnetes Lager (50) an der Kolbenstange (14) gelagert ist,
wobei der Außenring des Lagers (50) mittels eines in einer axialen Richtung vorgesehenen Anschlages gehalten ist in einer Abstützung (8),
wobei ein von der Kolbenstange (14) umschlossener Raumbereich und ein zwischen Kolbenstange (14) und Gehäuse angeordneter Raumbereich vorgesehen sind wobei innerhalb der Raumbereiche ein Öl-Luft-Gemisch vorgesehen ist,
**dadurch gekennzeichnet, dass**
der Außenring des Lagers (50) mittels eines in der anderen axialen Richtung vorgesehenen Sicherungsrings (83) gehalten ist in der Abstützung (8),
wobei die Abstützung (8) einen Federbereich (81) umfasst, mittels dessen die Abstützung (8) an der Kolbenstange (14) Stützkräfte ableitet und die Abstützung (8) mit ihrem äußeren Umfang gegen die Innenwandung der Kolbenstange (14) drückt und somit die Gewindespindel (5) abstützt,
wobei der Federbereich (81) der Abstützung (8) in Umfangsrichtung unterbrochen ausgeführt ist oder Ausnehmungen aufweist, insbesondere zum Öldurchtritt,
wobei die Abstützung (8) aus Polyethylen oder einem Polyethylen enthaltendem Material gefertigt ist,
wobei die Spindelmutter (6) Entlüftungsbohrungen (51) aufweist,
wobei die Entlüftungsbohrungen (51) im Wesentlichen axial ausgerichtet sind, wobei die Entlüftungsbohrungen (51) den von der Kolbenstange (14) umschlossenen Raumbereich mit dem zwischen Kolbenstange (14) und Gehäuse angeordneten Raumbereich verbinden zum Druckausgteich.

2. Spindelmotor nach Anspruch 1,
**dadurch gekennzeichnet, dass**
ein Zapfen (53) am axialen Endbereich der Gewindespindel (5) ausgebildet ist, auf dem der Innenring des Lagers (50) vorgesehen ist, insbesondere wobei der Zapfen (53) einstückig an der Gewindespindel (5) ausgebildet ist.

3. Spindelmotor nach mindestens einem der vorangegangenen Ansprüche,
**dadurch gekennzeichnet, dass**
in Umfangsrichtung vier oder mehr Entlüftungsbohrungen (51) vorgesehen sind.

4. Spindelmotor nach mindestens einem der vorangegangenen Ansprüche,
**dadurch gekennzeichnet, dass**
das Gehäuseteil axial zwischen Elektromotor und dem der Spindelmutter (6) angeordnet ist.

5. Spindelmotor nach mindestens einem der vorangegangenen Ansprüche,
**dadurch gekennzeichnet, dass**
eine Dichtung zwischen dem Raumbereich des Elektromotors und dem Raumbereich, in welchem die Spindelmutter (6) angeordnet ist, vorgesehen ist.

6. Spindelmotor nach mindestens einem der vorangegangenen Ansprüche,
**dadurch gekennzeichnet, dass**
die Dichtung axial zwischen einem Lager (18) der Gewindespindel (5) und einer die Rotorwelle (2) und die Gewindespindel (5) verbindenden Kupplung angeordnet ist.

## Claims

1. Spindle motor,
comprising an electric motor having a rotor connected to a threaded spindle (5), the thread of which engages with a thread of a spindle nut (6) connected to a piston rod (14),
wherein the spindle nut (6) with piston rod (14) is axially guided in a housing part of the spindle motor,
wherein a guide part is connected to the spindle nut (6) and the piston rod (14) for axial guidance,
wherein the threaded spindle (5), at its axial end region facing the electric motor, is mounted in the housing part or in a second housing part connected to the first housing part, via bearings (18),
wherein the threaded spindle (5), at its axial end region facing away from the electric motor, is mounted on the piston rod (14) via a bearing (50) arranged on the threaded spindle (5),
wherein the outer ring of the bearing (50) is held in a support (8) by means of a stop provided in an axial direction,
wherein a spatial region enclosed by the piston rod (14) and a spatial region arranged between piston rod (14) and housing are provided,
wherein an oil-air mixture is provided inside the spatial regions,
**characterised in that**
the outer ring of the bearing (50) is held in the support (8) by means of a securing ring (83) provided in the other axial direction,
wherein the support (8) comprises a spring region (81), by means of which the support (8) carries away supporting forces at the piston rod (14) and the support (8) presses with its outer circumference against the inner wall of the piston rod (14) and thus supports the threaded spindle (5),
wherein the spring region (81) of the support (8) is of interrupted design in the circumferential direction or has openings, in particular for the passage of oil,
wherein the support (8) is produced from polyethylene or a polyethylene-containing material,
wherein the spindle nut (6) has ventilation bores (51),
wherein the ventilation bores (51) are oriented substantially axially, wherein the ventilation bores (51) connect the spatial region enclosed by the piston rod (14) to the spatial region arranged between piston rod (14) and housing, for pressure equalisation.

2. Spindle motor according to Claim 1,
**characterised in that**
a pin (53) is formed on the axial end region of the threaded spindle (5), on which pin the inner ring of the bearing (50) is provided, in particular wherein the pin (53) is integrally formed on the threaded spindle (5).

3. Spindle motor according to at least one of the preceding claims,
**characterised in that**
four or more ventilation bores (51) are provided in the circumferential direction.

4. Spindle motor according to at least one of the preceding claims,
**characterised in that**
the housing part is arranged axially between electric motor and the spindle nut (6).

5. Spindle motor according to at least one of the preceding claims,
**characterised in that**
a seal is provided between the spatial region of the electric motor and the spatial region in which the spindle nut (6) is arranged.

6. Spindle motor according to at least one of the preceding claims,
**characterised in that**
the seal is arranged axially between a bearing (18) of the threaded spindle (5) and a coupling connecting the rotor shaft (2) and the threaded spindle (5).

## Revendications

1. Moteur de broche
comprenant un moteur électrique muni d'un rotor relié à une broche filetée (5) dont le filetage est en prise avec un filetage d'un écrou (6) à broche, qui est relié à une tige (14) de piston,
ledit écrou (6) à broche étant guidé axialement, avec ladite tige (14) de piston, dans une partie de carter dudit moteur de broche,
une partie de guidage étant reliée audit écrou (6) à broche et à ladite tige (14) de piston, en vue du guidage axial,
la broche filetée (5) étant montée au niveau de sa région extrême axiale tournée vers ledit moteur électrique, par l'intermédiaire de paliers (18), dans ladite partie de carter ou dans une seconde partie de carter reliée à la première partie,
ladite broche filetée (5) étant montée sur ladite tige (14) de piston, au niveau de sa région extrême axiale tournée à l'opposé dudit moteur électrique, par l'intermédiaire d'un palier (50) implanté sur ladite broche filetée (5),
la bague extérieure dudit palier (50) étant retenue dans un élément de soutien (8), au moyen d'une butée prévue dans une direction axiale,
sachant qu'il est prévu une zone spatiale entourée par la tige (14) de piston, et une zone spatiale située entre ladite tige (14) de piston et le carter,
un mélange d'huile et d'air étant prévu à l'intérieur de ladite zone spatiale,
**caractérisé par le fait que**
la bague extérieure du palier (50) est retenue, dans l'élément de soutien (8), au moyen d'une bague d'arrêt (83) prévue dans l'autre direction axiale,
l'élément de soutien (8) comporte une région élastique (81) au moyen de laquelle ledit élément de soutien (8) dérive des forces d'appui au niveau de la tige (14) de piston et ledit élément de soutien (8) exerce, par son pourtour extérieur, une pression contre la paroi intérieure de ladite tige (14) de piston, et procure ainsi un appui à la broche filetée (5), ladite région élastique (81) dudit élément de soutien (8) étant de réalisation discontinue dans le sens périphérique, ou présentant des évidements, notamment en vue du passage d'huile,
ledit élément de soutien (8) étant fabriqué en polyéthylène, ou en un matériau renfermant du polyéthylène,
l'écrou (6) à broche étant muni d'alésages de ventilation (51),
les alésages de ventilation (51) étant orientés pour l'essentiel dans le sens axial, lesdits alésages de ventilation (51) raccordant la zone spatiale entourée par la tige (14) de piston à la zone spatiale située entre ladite tige (14) de piston et le carter, en vue de l'équilibrage de pression.

2. Moteur de broche, selon la revendication 1,
**caractérisé par le fait**
**qu'**un tenon (53), sur lequel la bague intérieure du palier (50) est prévue, est ménagé au niveau de la région extrême axiale de la broche filetée (5), ledit tenon (53) étant réalisé d'une seule pièce avec ladite broche filetée (5).

3. Moteur de broche, selon au moins l'une des revendications précédentes,
**caractérisé par le fait que**
des alésages de ventilation (51), au nombre de quatre ou plus, sont prévus dans le sens périphérique.

4. Moteur de broche, selon au moins l'une des revendications précédentes,
**caractérisé par le fait que**
la partie de carter est interposée axialement entre le moteur électrique et l'écrou (6) à broche.

5. Moteur de broche, selon au moins l'une des revendications précédentes,
**caractérisé par le fait**
**qu'**une garniture d'étanchement est prévue entre la zone spatiale du moteur électrique et la zone spatiale dans laquelle l'écrou (6) à broche est situé.

6. Moteur de broche, selon au moins l'une des revendications précédentes,
**caractérisé par le fait que**
la garniture d'étanchement est interposée, dans le sens axial, entre un palier (18) de la broche filetée (5) et un accouplement reliant l'arbre (2) du rotor et ladite broche filetée (5).
